# EUROPEAN PATENT APPLICATION

(11) **EP 1 571 545 A2**
(43) Date of publication of application: **07.09.2005**
(21) Application number: 05251120.1
(22) Date of filing: 25.02.2005
(51) Int. Cl.: G06F 3/12

(54) **Secure Printing**

(30) Priority: 02.03.2004 GB 0404714
(71) Applicant: Software 2000 Ltd., Oxford OX4 4GA (GB)
(72) Inventor: Booth, Judith Penelope c/o Software 2000 Ltd, Oxford OX4 4GA (GB); Williams, Jonathon Mark Alan c/o Software 2000 Lt, Oxford OX4 4GA (GB)
(74) Representative: Merryweather, Colin Henry

(57) **Abstract**

A computer system running a Windows™ operating system is capable of remote printing on a printing system remotely connected to the computer system over a network in which the transmission of the print data over the network is secure. The computer system has a print-source program which generates print data for printing a document. The local print provider of the Windows™ operating system has a port monitor which transmits the print data to the printing system over the network using a secure transmission protocol in which the transmitted data is encrypted. The printing system, which comprises a printer device capable of printing, has a server program capable of decrypting the print data received from the computer system using said secure transmission protocol, and a printer program capable of controlling the printer device using the print data to print the document.

## Description

The present invention relates to secure printing from a computer system running a Windows™ operating system to a printing system connected to the computer system remotely over a network.

When printing across a network to a remote printer, there is a risk that the raw network packets could be captured by a computer connected to the network so that the document could effectively be stolen without anyone knowing. The actual risks will depend on what is being printed and on the nature of the network that is used, but there are many situations where security is needed. One example is where print data is sent over the Internet, for example by a remote worker back to his office. Even within a private network that is secure from external attacks, there is often a need for security, for example in the case that a document contains sensitive information to be kept secret from some users of the network or even in the case that not all the users of the network can be trusted.

To achieve secure printing, it is necessary that the print data is encrypted before transmission over the network by the computer system using an encryption key. The printing system decrypts the received print data using a corresponding decryption key. As a result, the print data on the network is in encrypted form and therefore secure if captured from the network. Such encryption techniques are in general terms well known, but in practical systems there remain difficulties in how the encryption is implemented within the computer system.

The present invention relates specifically to achieving secure printing from a computer system running a Windows™ operating system. There are a family of Windows™ operating systems produced by Microsoft Corporation. Further Windows™ operating systems are due for release in the future. Windows™ operating systems are of great importance because they are very widely used and currently account for the majority of the market in computer systems for home and business use.

There have been some proposals for implementing encryption of print data in a computer system before transmission over a network, as follows.

One type of implementation has used a modified printer driver, which is a program which generates print data under the control of an application. In this case the printer driver performs the encryption and outputs encrypted print data which is subsequently transmitted over the network. Examples of this type of implementation are disclosed in EP-A-1,091,285 and US-5,633,932. In EP-A-1,091,285, print data is encrypted by the printer driver on the local computer system and decrypted on the remote printer using the PostScript language. In US-5,633,932, print data is encrypted by the printer driver on the local computer system, and to ensure that the print job is only printed in the presence of an authorized recipient, the printer has a device such as a smart card reader to provide the key required for decryption of the print job.

Such a type of implementation in a printer driver has disadvantages. For a given printer driver, it restricts the range of printers on which secure printing is supported. Conversely, this type of implementation also requires a specialized printer driver for every target printer/language combination that needs to support this approach. Many printers will support multiple languages and the best language to use for any print job will be determined by the application that is being used. For example, black-and-white laser printers will typically support PostScript as well as PCL XL and PCL-5e.

Another implementation is present in the secure printing solution called iPrint provided by Novell Inc. which is based on their print server technology NDPS (Novell Distributed Print Services). On the local computer which acts as a client running a Windows™ operating system, this uses a network print provider to which print data is routed and which communicates with an NDPS server using a secure transmission protocol, namely Internet Printing Protocol over Secure Socket Layer. This implementation has the disadvantage that it is restricted to this particular type of print server. To apply this type of implementation to a printer not supported by the NDPS server it would be necessary to develop a new print server and a new network print provider for the local computer system which involves a large amount of work and expense.

According to a first aspect of the present invention, there is provided a method of printing a document from a computer system having a Windows™ operating system, including a local print provider having a port monitor, to a printing system connected to the computer system remotely over a network, the method comprising:
in the computing system,
generating print data for printing the document, and
transmitting the print data to the printing system over the network using the local print provider with the port monitor in a configuration in which the port monitor causes transmission of the print data using a secure transmission protocol in which the transmitted data is encrypted; and
in the printing system,
decrypting the print data received from the computer system using said secure transmission protocol, and
printing the document using the print data.

According to a second aspect of the present invention, there is provided a computer system and a printing system connected to the computer system remotely over a network, wherein:
the computer system comprises a processor means and a memory means storing programs capable of execution by the processor means, the programs including
a print-source program capable, on execution, of generating print data for printing a document, and
a Windows™ operating system, including a local print provider having a port monitor capable, on execution, of transmitting the print data to the printing system over the network, the port monitor being capable of transmitting the print data using a secure transmission protocol in which the transmitted data is encrypted; and
the printing system comprises a printer device capable of printing, a processor means and a memory means storing programs capable of execution by the processor means, the programs including
a server program capable, on execution, of decrypting the print data received from the computer system using said secure transmission protocol, and
a printer program capable, on execution, of printing the document using the print data.

According to further aspects of the invention, there are provided a corresponding method and computer apparatus for securely transmitting print data for printing a document from a computer apparatus having a Windows™ operating system, including a local print provider having a port monitor, to a printing system, as well as a corresponding port monitor which may be stored on a recording medium or in a memory.

Accordingly, in the present invention, encryption of the transmitted print data is achieved by the port monitor which is executed within the local print provider of a Windows™ operating system. In particular the port monitor is arranged to transmit the print data remotely over a network using a secure transmission protocol. Thus the transmitted data is encrypted by the port monitor in accordance with the secure transmission protocol. In contrast, the port monitor in the local print provider of existing Windows™ operating systems uses a transmission protocol which is not secure in particular Transmission Control Protocol/Internet Protocol (TCP/IP).

As such, the present invention provides a number of advantages over proposals for implementing encryption of print data set out above.

The use of a port monitor allows secure printing to be used with print jobs created by any Windows™ application without requiring direct invention from the user. It also allows the use of standard transmission protocols, such as Hypertext Transfer Protocol over Secure Socket Layer (HTTPS), on the printing system thereby avoiding the need for specialized hardware on the target printer.

By making use of the port monitor in the local print provider to provide the encryption, the present invention provides secure printing to all the printing systems supported by the computer system without the need to provide a modified printer driver for each one of the combinations of target printing system and languages supported by those printing systems, as in the type of implementation set out above in which the printer driver performs the encryption. Similarly, the present invention may be easily applied when new printers are installed on the computer system without the need to provide a modified printer driver supporting encryption for that new printer.

Furthermore, the present invention is relatively straightforward to implement. In practice, it merely requires a new port monitor to be included in the local print provider of the Windows™ operating system to support a secure transmission protocol. Thus, the present invention provides the advantage of secure printing in a relatively simple manner without the need to implement a print server and corresponding network print provider, which is complicated and hence difficult and expensive.

The secure transmission protocol is desirably HTTPS, but alternatively any other secure transmission protocol may be used, for example Internet Printing Protocol over Secure Socket Layer (IPP/SSL).

Typically, the print data comprises commands in a language executable by the printing system which may be generated by a printer driver called by an application on the computer system. In this case, the commands are executed in the printing system to perform the printing. Example of such languages which may be applied to the present invention include PostScript or PCL.

The present invention is applicable to any Windows™ operating system including a local print provider having a port monitor. This includes existing Windows™ operating systems such as Windows 95™, Windows 98™, Windows NT 4™, Windows 2000™, Windows Me™, Windows XP™ and Windows Server 2003™. It may also include future Windows™ operating systems. At least the next Windows™ operating system due for release is expected to include a local print provider having a port monitor.

Of course, the present invention may be applied to printing over any type of network, including a local network and the Internet.

The present invention may be applied to a computer system which is a single computer apparatus running both the print-source program which generates the print data and the Windows™ operating system, including a local print provider which transmits the print data. Such local spooling in which the local print provider having the port monitor is local to computer apparatus which generates the print data is likely to be most common implementation of present invention. However, as an alternative, spooling could be used, in which case the computer system comprises a local client computer apparatus running the print-source program which generates the print data, and connected to a remote server computer apparatus running the Windows™ operating system, including a local print provider which transmits the print data. This alternative is acceptable from the point of view of security provided that the connection between the client and the server is secure.

The present invention may be applied to a printer system which is a single printer both running the server program which decrypts the print data and performing the actual printing. This option requires the printer to have an embedded server.

Alternatively, the present invention may be applied to a printer system which comprises a server running the server program which decrypts the print data and a printer which performs the actual printing connected to the server over a secure connection, for example a network such as an Ethernet known to be secure or a parallel cable.

There will now be described an embodiment of the present invention by way of non-limitative example with reference to the accompanying drawings, in which:
Fig. 1 shows a network connecting a local computer to two remote printers;
Fig. 2 is an overview of the printing process on a Windows™ operating system;
Fig. 3 is flowchart of the operation of a known port monitor implementing a TCP/IP transmission protocol which is not secure;
Fig. 4 is flowchart of the operation of a port monitor implementing a secure HTTPS transmission protocol;
Fig. 5 is a flowchart of the SSL negotiation process; and
Fig. 6 is a flowchart of the operation of a server program.

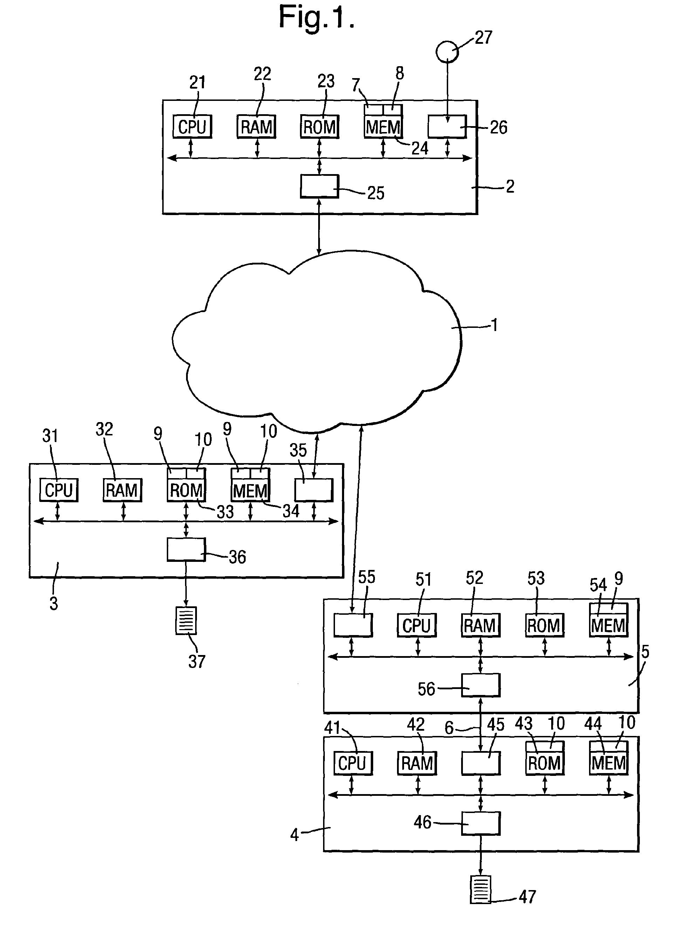

Fig. 1 shows a network 1 in which an embodiment of the present invention is implemented. The network 1 may be any type of network including, but not exclusively a local network or the Internet.

Connected to the network 1 is a local computer 2 and two printers 3 and 4. The local computer 2 may be any type of computer, typically a personal computer, a lap-top or a portable device such as a personal digital assistant or a mobile telephone with a printing capability. The printers 3 and 4 may also be any type of printer including, but not exclusively, a laser printer, an inkjet printer, or a facsimile apparatus or photocopier capable of printing.

The local computer 2 is a single computer apparatus which constitutes the computer system of the present invention in this embodiment.

The first printer 3 is connected directly to the network. The second printer 4 is connected indirectly to the network 1 via a server 5. The server 5 is connected to the network 1 and the second printer 4 is connected to the server 5 over a secure connection 6. In this embodiment, the printing system of the present invention is constituted by either (1) the first printer 3 or (2) the server 5 and the second printer 4 together.

The local computer 2 has a conventional construction including a processor 21, a RAM 22, a ROM 23, a memory 24 which is typically a hard drive, a network interface 25 by which the local computer 2 is connected to the network 1, and a recording medium drive 26 capable of reading a removable recording medium 27. The recording medium 27 may be of any type including, but not exclusively, a magnetic storage medium such as a floppy disk, an optical recording medium such as a CD or DVD, a magneto-optical storage medium or a memory chip. The processor 21 may be a single processing unit or may include plural processing units. The memory 24 stores a large number of programs capable of execution by the processor 21, which programs may be initially stored on the recording medium 27 for installation onto the local computer 2. These programs include a Windows™ operating system 7 and an application program 8 running under the Windows™ operating system 7.

The first printer 3 is of the type having an embedded server and has a conventional construction including a processor 31, a RAM 32, a ROM 33, optionally a memory 34 which is typically a hard drive, a network interface 35 by which the first printer 3 is connected to the network 1, and a printing device 36 which is capable of printing a document 37. The processor 31 may be a single processing unit or may include plural processing units. The ROM 33 or memory 34 stores programs capable of execution by the processor 31. These programs include a server program 9 which handles communications over the network 1 and a printer program 10 which controls the printer device 35 to print on the basis of print data.

Similarly the second printer 4 and server 5 have a conventional construction. The second printer 4 includes a processor 41, a RAM 42, a ROM 43, optionally a memory 44 which is typically a hard drive, an interface 45 by which the second printer 4 is connected to the secure connection 6, and a printing device 46 which is capable of printing a document 47. The processor 41 may be a single processing unit or may include plural processing units. The ROM 43 or memory 44 stores a printer program 10, equivalent to the printer program 10 stored in the second printer 4, capable of execution by the processor 41 to control the printer device 46 to print on the basis of print data. The server 5 includes a processor 51, a RAM 52, a ROM 53, a memory 54 which is typically a hard drive, a network interface 55 by which the server 5 is connected to the network 1, and an interface 56 by which the server 5 is connected to the secure connection 6. The processor 51 may be a single processing unit or may include plural processing units. The memory 54 stores a server program 9, equivalent to the server program 9 stored in the second printer 4, capable of execution by the processor 51 to handle communications over the network 1.

Secure printing from the local computer 2 over the network 1 to one of the remote printers 3 or 4 is performed as follows. For ease of reference, there will first be described printing to the first printer 3 as the target printer.

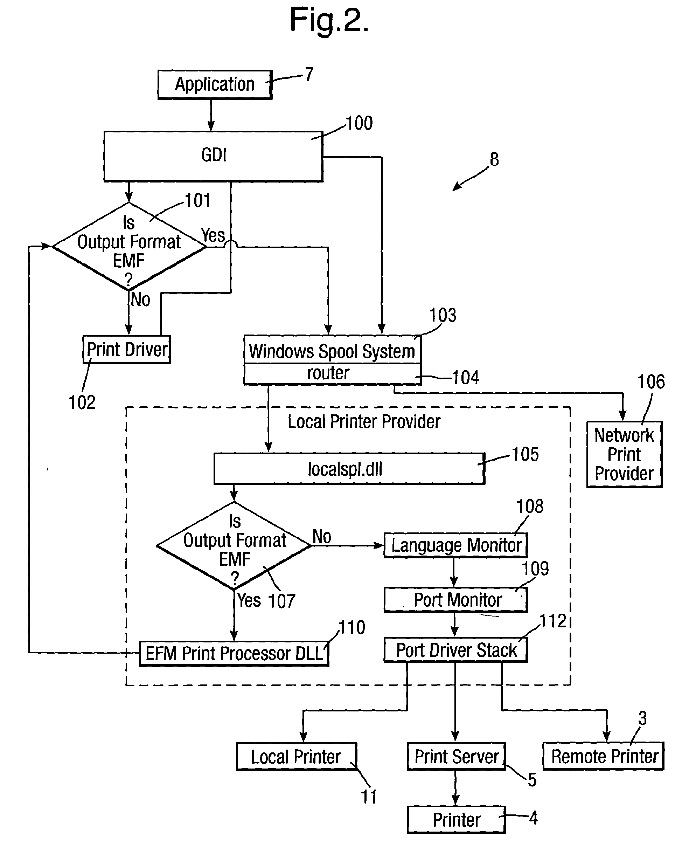

The Windows™ operating system 8 running on the local computer 2 includes elements to perform a printing process, as shown in Fig. 2. At the level of detail shown in Fig. 2, this printing process is the same as in existing Windows™ operating systems and further information thereon may be obtained from the website of Microsoft Corporation (www.microsoft.com).

Printing occurs under the control of the application program 7. When printing is to occur the application program 7 calls the graphics device interface (GDI) 100 to produce a print job comprising print data for controlling the first printer 3. The print jobs are spooled by the Windows™ operating system 8 as described below. Depending on the print queue configuration, the spooled print data may be in either a journal format such as EMF or it may be RAW print data. This is checked in step 101. If the format of the spooled print data is to be RAW print data, then the GDI 100 calls a printer driver 102 applicable to the first printer 3 to generate the print data. In the case of the Windows NT 4™ operating system and later Windows™ operating systems, the printer driver 102 is a printer graphics DLL. The print data output from the printer driver 102 contains commands in a language that is executable by the first printer 3 to render the print job. In general, the language may be any printer language depending on the type of the first printer 3. Printer languages vary from the relatively simple, such as those used for inkjet printers, to more complex languages such as PCL XL or PostScript. The print data is passed from the printer driver 102 to the spooler 103 back through the GDI 100.

If the check performed in step 101 determines that the format of the spooled print data is to be a journal format, then the print data is directly output to the spooler 103.

The spooler 103 includes a print request router 104. In the present case, the print request router 104 routes the print data to the local print provider 105 which is part of the Windows™ operating system 8. Although not in accordance with the present invention, the print request router 104 may alternatively route print data to a network print provider 106, if provided on the local computer 2. However, in accordance with the present invention, secure printing over the network 1 may be achieved without the need for such a network print provider 106.

The local print provider 105 puts print jobs into spooler files, manages despooling and directs print jobs to the relevant printer, in this case the first printer 3. When a print job is scheduled, the spool file is read and is checked in step 107 whether the output format is a journal format such as EMF. If not, then the print data is RAW print data and is sent, via the language monitor 108, to the port monitor 109.

If in step 107 it is determined that the output format is a journal format, then the print job is sent to the EMF print processor 110 which sends the print job back to the GDI 100 for conversion to into a RAW format, with the help of the printer driver 102. The converted print data is then sent back through the local print provider 105 to the port monitor 109 via the language monitor 108 (without being respooled).

The language monitor 108 provides a full duplex communications path between the print spooler 103 and bidirectional printers that are capable of providing software-accessible status information. It also adds printer control information, such as commands defined by the language of the print data, to the data stream. The language monitor 108 is optional.

The port monitor 109, through a port driver stack 112, controls the port to which the target printer is connected. In the present case, the destination printer is the first printer 3 or the second printer 4 remotely connected over the network 1, so the port controlled by the port monitor 109 is the network interface 25 of the local computer 2. Thus the port monitor 109 transmits the print data over the network 1. In particular, the port monitor 109 implements the transmission protocol for such transmission.

In general, a port monitor is a generic interface to diverse port technologies. A port monitor abstracts the local port behaviour. Thus, the network interface 25 and the network 1 itself are transparent to the elements of the Windows™ operating system 8 upstream of the port monitor. Every printer connection type will require a specific port monitor. Thus the Windows™ operating system 8 may also include port monitors that will support a local printer 11 locally connected to a serial, parallel or USB port and/or printers connected using TCP/IP. Other network protocols may require the installation of custom port monitors.

From the above description, it will be appreciated that the print data to be transmitted may be derived from either of the application 7 or the printer driver 102. Thus in this embodiment any of these programs may be considered as the print-source program of the present invention.

In most cases, the port monitor 109 will receive calls from the spooler 103 that mark the beginning and end of each print job with one or more calls to write the print data in between. It is also possible for the port monitor 109 to receive a single packet of print data without calls to mark the start and end of a print job, but that will only occur when the language monitor 108 is using bidirectional requests to obtain printer status information. It is possible that the size of the data blocks received by the port monitor 109 will be larger than the target device can support, in which case the port monitor 109 sends the print data in smaller blocks that the device can support.

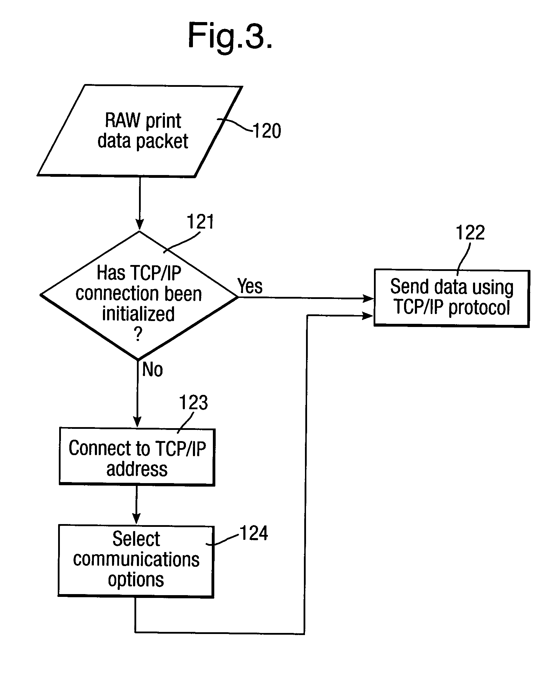

The above description of the printing process applies equally to existing Windows™ operating systems as to the embodiment of the present invention. In the case of existing Windows™ operating systems, the port monitor 109 typically implements a TCP/IP transmission protocol which is not secure. By way of comparison, such a TCP/IP transmission protocol will now be described with reference to Fig. 3 which is a flowchart showing an outline of the operation of a TCP/IP port monitor 109 upon receipt of a block of data 120 to be sent to a printer.

In step 121, it is checked whether the port monitor 109 already has an open connection to the TCP/IP port of the printer. If so, then in step 122 the port monitor 109 immediately sends the block of print data 120 to the printer. If it is determined in step 121 that the port monitor 109 does not have an open connection, then the port monitor proceeds to steps 123 and 124 to set up the connection in accordance with the TCP/IP transmission protocol. In step 123, the port monitor 109 connects to the TCP/IP address of the printer. In step 124, the port monitor 109 selects the appropriate communications options. After that, the process proceeds to step 122 to send the block of print data 120 to the printer.

In contrast, in order to implement the present invention, the port monitor 109 is a custom port monitor which is configured to transmit the print data using a secure transmission protocol in which the port monitor 109 encrypts the print data. The secure transmission protocol may be HTTPS, IPP/SSL, or any other secure transmission protocol. Within the secure transmission protocol, the port monitor communicates with the server program 9 running on the first printer 3.

To configure the port monitor 109, an administrator creates a new port using the port monitor 109 for every target printer for which secure printing is required. The administrator configures the port so that the port monitor 109 has sufficient information to create and use a secure connection. When HTTPS is the secure transmission protocol, the port configuration includes the network address associated with the target printer (eg the address of the first printer 3 or the server 5 to which the second printer 4 is connected) and the client certificate to be used for encryption by the port monitor 109. For further security of the private key within the client certificate, a password may also be required to be input into the local computer 2. The port configuration settings are stored in the registry of the Windows™ operating system 8. In order to avoid exposing the password for the private key in the certificate, the certificate may be re-encrypted with a new password generated by the port monitor 109.

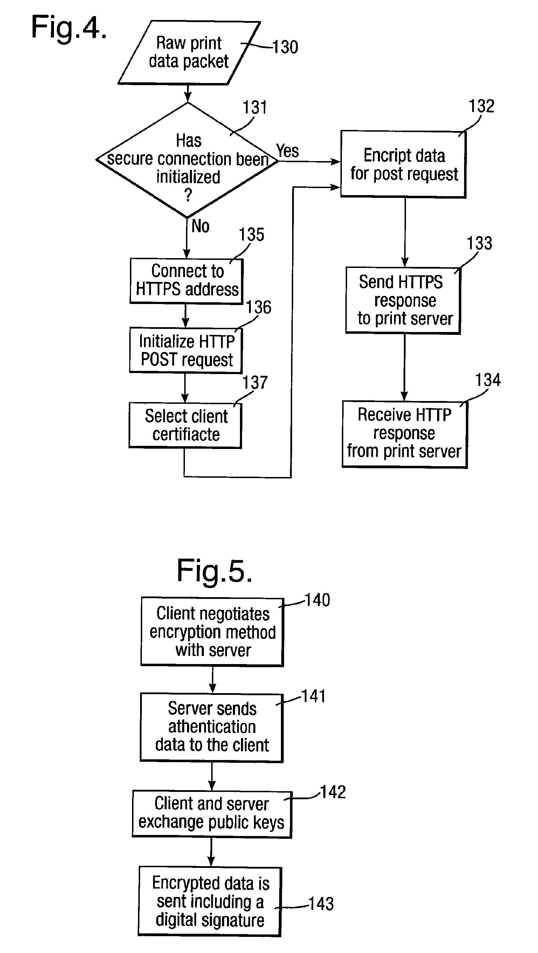

There will now be described with reference to Fig.4, the operation of the port monitor 109 upon receipt of a block of data 130 in the specific case that the secure transmission protocol is HTTPS. HTTPS uses HTTP (HyperText Transfer Protocol) combined with SSL for encryption. HTTP communication usually takes place over a TCP/IP connection. The basic steps required for establishing an HTTPS (or HTTP) connection are similar to those for TCP/IP connection as described above with reference to Fig. 3, except that a suitable HTTP request method must be used for communication. In this particular case, the POST request method is used to send the print data.

When the port monitor 109 receives a request to transmit the packet of print data to the first printer 3, in step 131, it is checked whether the port monitor 109 a connection to the HTTPS port of the first printer 3 has already been initialised. If so, then, in step 132, the port monitor 109 encrypts the print data for inclusion in POST requests, and, in step 133, the print monitor 109 sends the packet of print data 130 to the first printer 3 using HTTPS POST requests. Then, in step 134, the port monitor 109 waits for confirmation that the POST request has been properly received before it attempts to send any more data to the print server.

If it is determined in step 131 that the port monitor 109 does not have an open connection, then the port monitor proceeds to steps 135 to 137 to set up the connection in accordance with the HTTPS transmission protocol. In step 135, the port monitor 109 connects to the HTTPS address which has been specified for the port. In step 136, the port monitor 109 intialises the HTTPS POST request and selects suitable HTTP communication options as well as the required security options. In step 137, the port monitor 109 selects the client certificate that the HTTPS library will use to encrypt the print data. The HTTPS library will use standard SSL handshaking in order to obtain the server public key that it will use to encrypt the print data.

Such a standard SSL handshake sequence will now be described with reference to Fig. 5 which is a flowchart of the SSL negotiation process performed by the print monitor 109 acting as a client and the server program 9 of the first printer 3 acting as a server. Once the print monitor 109 (client) has made an initial connection, in step 140, the print monitor 109 (client) and the server program 9 negotiate the encryption technique that will be used. In step 141, the server program 9 authenticates itself to the print monitor 109 (client). In step 142, the print monitor 109 (client) and the server program 9 exchange certificates. The certificates are used by the print monitor 109 (client) and the server program 9 to create digital signatures sent, in step 143, with the encrypted data.

SSL uses public key cryptography to encrypt the data that is exchanged. Data is encrypted using both the sender's private key and the recipient's public key and will be decrypted by the recipient using its own private key and the sender's public key. In addition to this the certificates used are digitally signed by mutually trusted third parties in order to validate both recipient and sender.

Returning to Fig. 4, after the connection has been set up in accordance with the HTTPS transmission protocol in steps 135 to 137, the port monitor proceeds to steps 132 to 134, as described above, to encrypt the packet of print data 130 and send it to the first printer 3 using HTTPS POST requests.

The port monitor 109 uses a persistent HTTPS connection for each print job. The port monitor will close the connection when it processes a call to its EndDoc function.

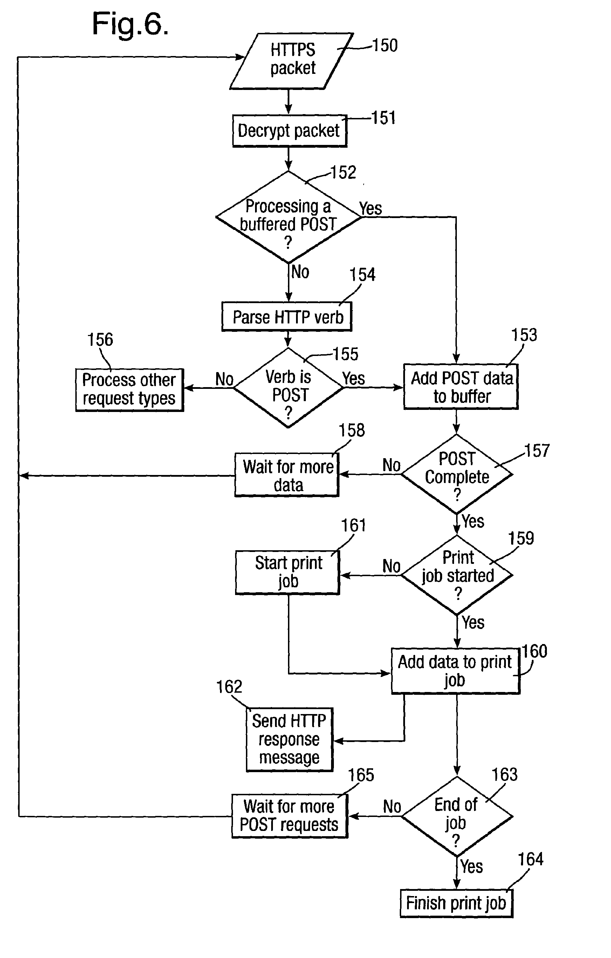

There will now be described the operation of the server program 9 running on the first printer 3 when it receives a data packet 150 of an HTTPS POST request from the port monitor 109, as shown in Fig. 6.

In step 151, the server program 9 decrypts the data packet 150 in accordance with the HTTPS transmission protocol using the keys identified in the SSL negotiation process described above.

The transmission of data from the port monitor 109 to the server program 9 may split up a POST request into smaller HTTPS packets. The POST request will include a Content-Length header that specifies the size of data included with the POST request. The server program 9 buffers the data until it has received all of the data specified by the POST request header as follows. In step 152, the server program 9 checks whether it is processing a buffered POST request. If so, in step 153, the data packet 150 is added to the buffer. If not, the server program 9 parses the HTTP verb in step 154 and checks in step 155 if the verb is a POST verb. Assuming it is, the server program 9 proceeds to step 153 and buffers the data packet 150. In the event that it is determined in step 155 that the HTTP verb is not a POST verb, in step 156 the server program performs some other processing applicable to the request type.

After step 153, in step 157 it is detected if the POST request is complete using the Content-Length header. If not, the server program 9 in step 158 waits for another data packet 150 to be received, and then restarts the processing shown in Fig. 6.

The server program 9 starts a new print job when it has received the first complete POST request on an HTTPS connection. All subsequent POST requests on the same connection will be added to the print job. To achieve this, after it is determined in step 157 that the POST request is complete, it is checked in step 159 if a print job has already been started. If so, then in step 160 the POST request is added to the existing print job, the POST requests being added to the print job in the order that they are received from the port monitor 109. If not, in step 161, a new print job is started and then in step 160 the POST request is added to the new print job.

After step 160, two actions occur. One action is for the server program 9 in step 162 to send an HTTP response message to the port monitor 109. The other action is for the server program 9 in step 163 to check if the print job has ended. If so, the print job is finished in step 164. Otherwise, the server program 9 in step 165 waits for another POST request to be received, and then restarts the processing shown in Fig. 6.

At the end of each print job, the server program 9 and the port monitor 109 will negotiate to close the HTTPS connection used for that print job.

In the first printer 3, the printer program 10 uses the print data of the print jobs received by the server program 9 to print the document on the printing device 36. In particular, the commands contained in the print job are executed by the printer program to render the print job.

Instead of printing to the first printer 3 as decribed above, it is possible to print to the second printer 4 as the target printer using basically the same procedure. In this case, the very same operations as described above with reference to Figs. 4 to 6 are performed except that the port monitor 109 is configured to communicate with the server program 9 on the server 5 instead of the server program 9 on the first printer 3, although the server programs themselves perform the same function on both the server 5 and the first printer 3. In addition, the print job received by the server 5 is transmitted over the secure connection 6 to the second printer 4 where the printer program 10 running on the second printer 4, which is fundamentally the same as the printer program running on the first printer, uses the print data in the print job to perform the printing on the printing device 46.

In the embodiment described above, the print job is spooled locally in the sense that the local print provider 105 is running on the same computer apparatus as the application program 7 from which printing occurs. This is the context in which the present invention will normally be used. However, as an alternative, the local computer 2 could be replaced by a computer system comprising a local computer apparatus which runs the application program 7 and a remote computer apparatus connected to the local computer apparatus over a secure connection and which runs the local print provider. This results in the print job being spooled to a remote print queue.

This description has concentrated on the preferred implementation of a secure port monitor using HTTPS. Secure transmission of print jobs across any network could also use any other secure transmission protocol. One possible alternative would be Internet Printing Protocol (IPP) using SSL for encryption.

Another alternative protocol that might in principle be used instead of HTTPS would be to encrypt blocks of printer data and to send these using normal TCP/IP. Although in principle this could be made to work, in practice this would not be a useful approach. One of the disadvantages of such an approach is that it would only work with custom hardware which expected to receive encrypted data packets on its TCP/IP connection. It is also not immediately clear how such a printer would be able to receive both encrypted and normal print jobs on the same TCP/IP port. A separate protocol would also need to be used to exchange the public keys needed for encrypting and decrypting the data. Our preferred solution using a secure transmission protocol such as HTTPS has a major advantage that it is straightforward to implement.

## Claims

1. A method of printing a document from a computer system having a Windows™ operating system, including a local print provider having a port monitor, to a printing system connected to the computer system remotely over a network, the method comprising:
in the computing system,
generating print data for printing the document, and
transmitting the print data to the printing system over the network using the local print provider with the port monitor in a configuration in which the port monitor causes transmission of the print data using a secure transmission protocol in which the transmitted data is encrypted; and
in the printing system,
decrypting the print data received from the computer system using said secure transmission protocol, and
printing the document using the print data.

2. A method according to claim 1, wherein the secure transmission protocol is Hypertext Transfer Protocol over Secure Socket Layer.

3. A method according to claim 1 or 2, wherein the print data comprises commands in a language executable by the printing system, and the step of printing the document comprises executing the commands.

4. A method according to any one of the preceding claims, wherein the computing system is a computer apparatus on which both the steps of generating print data and transmitting the print data are performed.

5. A method according to any one of the preceding claims, wherein the printing system is a printer on which both the steps of decrypting the print data, and printing the document are performed.

6. A method according to any one of claims 1 to 4, wherein the printing system comprises a server and a printer connected to the server over a secure connection, wherein
the step of decrypting the print data is performed in the server,
the method further comprises transmitting the decrypted print data from the server over the secure connection, and
the step of printing the document is performed by the printer.

7. A combination of a computer system and a printing system connected to the computer system remotely over a network, wherein:
the computer system comprises a processor means and a memory means storing programs capable of execution by the processor means, the programs including
a print-source program capable, on execution, of generating print data for printing a document, and
a Windows™ operating system, including a local print provider having a port monitor capable, on execution, of transmitting the print data to the printing system over the network, the port monitor being capable of transmitting the print data using a secure transmission protocol in which the transmitted data is encrypted; and
the printing system comprises a printer device capable of printing, a processor means and a memory means storing programs capable of execution by the processor means, the programs including
a server program capable, on execution, of decrypting the print data received from the computer system using said secure transmission protocol, and
a printer program capable, on execution, of printing the document using the print data.

8. A combination according to claim 7, wherein the secure transmission protocol is Hypertext Transfer Protocol over Secure Socket Layer.

9. A combination according to claim 7 or 8, wherein the print-source program is capable of generating print data comprising commands in a language executable by the printing system, and the step of printing the document comprises executing the commands.

10. A combination according to any one of claims 7 to 9, wherein the computing system is a computer apparatus having both the print-source program, and the Windows™ operating system including the local print provider having the port monitor.

11. A combination according to any one of claims 7 to 10, wherein the printing system is a printer which comprises the printer device and has both the server program and the printer program.

12. A combination according to any one of claims 7 to 10, wherein the printing system comprises a server having the server program and a printer connected to the server over a secure connection, the printer comprising the printer device and having the server program.

13. A method of securely transmitting print data for printing a document from a computer apparatus having a Windows™ operating system, including a local print provider having a port monitor, to a printing system connected to the computer system remotely over a network, the method comprising
transmitting the print data to the printing system over the network using the local print provider with the port monitor in a configuration in which the port monitor causes transmission of the print data using a secure transmission protocol in which the transmitted data is encrypted.

14. A method according to claim 15, wherein the secure transmission protocol is Hypertext Transfer Protocol over Secure Socket Layer.

15. A method according to claim 15 or 16, wherein the print data comprises commands in a language executable by the printing system.

16. A computer apparatus for securely transmitting print data for printing a document to a printing system connected to the computer apparatus remotely over a network,
the computer apparatus comprising a processor means and a memory means storing programs capable of execution by the processor means, the programs including
a Windows™ operating system, including a local print provider having a port monitor capable, on execution, of transmitting the print data to the printing system over the network, the port monitor being capable of transmitting the print data using a secure transmission protocol in which the transmitted data is encrypted.

17. A computer apparatus according to claim 16, wherein the secure transmission protocol is Hypertext Transfer Protocol over Secure Socket Layer.

18. A computer apparatus according to claim 16 or 17, wherein the print data comprises commands in a language executable by the printing system.

19. A computer apparatus according to any one of claims 16 to 18, wherein the programs stored in the memory of the computer apparatus further include a print-source program capable of generating the print data.

20. A computer apparatus according to claim 19, wherein the print source program is a printer driver.

21. A port monitor capable of execution by a computer apparatus, within the local print provider of a Windows™ operating system,
the port monitor being arranged, on execution, to transmit print data for printing a document from the computer apparatus by which the port monitor is executed to a printing system connected to the computer apparatus remotely over a network using a secure transmission protocol in which the transmitted data is encrypted.

22. A recording medium readable by a computer apparatus and storing a port monitor capable of execution by the computer apparatus, within the local print provider of a Windows™ operating system,
the port monitor being arranged, on execution, to transmit print data for printing a document from the computer apparatus by which the port monitor is executed to a printing system connected to the computer apparatus remotely over a network using a secure transmission protocol in which the transmitted data is encrypted.

23. A memory readable by a computer apparatus and storing a port monitor capable of execution by the computer apparatus, within the local print provider of a Windows™ operating system,
the port monitor being arranged, on execution, to transmit print data for printing a document from the computer apparatus by which the port monitor is executed to a printing system connected to the computer apparatus remotely over a network using a secure transmission protocol in which the transmitted data is encrypted.
